# EUROPÄISCHE PATENTSCHRIFT

(11) **EP 3 715 796 B1**
(45) Veröffentlichungstag und Bekanntmachung des Hinweises auf die Patenterteilung: **15.06.2022**
(21) Anmeldenummer: 20160341.2
(22) Anmeldetag: 02.03.2020
(51) Int. Cl.: G01F 1/60, G01N 27/08

(54) **MAGNETISCH-INDUKTIVES DURCHFLUSSMESSGERÄT MIT LEITFÄHIGKEITSMESSEINRICHTUNG UND VERFAHREN ZUM BETREIBEN EINES MAGNETISCH-INDUKTIVEN DURCHFLUSSMESSGERÄTES MIT LEITFÄHIGKEITSMESSEINRICHTUNG**
MAGNETIC-INDUCTIVE FLOW MEASURING DEVICE WITH CONDUCTIVITY MEASURING DEVICE AND METHOD FOR OPERATING A MAGNETIC-INDUCTIVE FLOW MEASURING DEVICE WITH CONDUCTIVITY MEASURING DEVICE
DISPOSITIF DE MESURE DE DÉBIT MAGNÉTIQUE-INDUCTEUR POURVU D'AGENCEMENT DE MESURE DE CONDUCTIVITÉ ET PROCÉDÉ DE FONCTIONNEMENT D'UN DISPOSITIF DE MESURE DE DÉBIT MAGNÉTIQUE-INDUCTEUR POURVU D'AGENCEMENT DE MESURE DE CONDUCTIVITÉ

(30) Priorität: 27.03.2019 DE 102019107904
(43) Veröffentlichungstag der Anmeldung: 30.09.2020
(73) Patentinhaber: Krohne Messtechnik GmbH, 47058 Duisburg (DE)
(72) Erfinder: Brockhaus, Helmut, 46145 Oberhausen (DE); Dabrowski, Markus, 47269 Duisburg (DE)
(74) Vertreter: Gesthuysen Patentanwälte

(56) Entgegenhaltungen:
- EP-A1- 0 336 615
- EP-A1- 0 626 567
- DE-A1- 10 243 748
- DE-A1-102009 002 539
- DE-A1-102014 007 426

## Beschreibung

Die Erfindung betrifft ein magnetisch-induktives Durchflussmessgerät, mit einem Messrohr zum Führen eines elektrisch leitfähigen Mediums, mit einer Magnetfelderzeugungseinrichtung zur Erzeugung eines das Messrohr zumindest teilweise senkrecht zur Strömungsrichtung des Mediums durchsetzenden Magnetfeldes, mit Elektroden zum Abgreifen einer in dem Medium induzierten Messspannung und mit einer Leitfähigkeitsmesseinrichtung zur Bestimmung der Leitfähigkeit des leitfähigen Mediums. Zudem betrifft die Erfindung ein Verfahren zum Betreiben eines solchen magnetisch-induktiven Durchflussmessgerätes.

Magnetisch-induktive Durchflussmessgeräte dienen zur Bestimmung des Durchflusses eines elektrisch leitfähigen Mediums. Wenn nachfolgend vereinfachend von der "Leitfähigkeit" des Mediums die Rede ist, ist stets die elektrische Leitfähigkeit des Mediums gemeint. Das der Durchflussmessung zugrunde liegende Messprinzip beruht auf dem Prinzip der Ladungstrennung von Teilchen in einem Magnetfeld. Die Ladungstrennung führt zu einer induzierten Spannung - der Messspannung -, die proportional zur Strömungsgeschwindigkeit der in dem Medium bewegten Ladungsträger ist, sodass aus der Strömungsgeschwindigkeit auf den Durchfluss im Medium geschlossen werden kann. Aus der Praxis ist es bekannt, ein zeitlich alternierendes Magnetfeld für die magnetisch-induktive Durchflussmessung zu verwenden.

Damit eine magnetisch-induktive Durchflussmessung an einem Medium durchgeführt werden kann, muss dieses eine elektrische Mindestleitfähigkeit aufweisen. Die Leitfähigkeit, bzw. der Leitfähigkeitswert des elektrisch leitfähigen Mediums ist jedoch häufig nicht bekannt. Entsprechend sind aus dem Stand der Technik magnetisch-induktive Durchflussmessgeräte bekannt, die zudem eine Leitfähigkeitsmesseinrichtung aufweisen, mit der die Leitfähigkeit des leitfähigen Mediums bestimmt werden kann.

Zur Bestimmung der Leitfähigkeit wird zwischen den Elektroden ein Strom eingeprägt und anschließend die resultierende zwischen den beiden Elektroden anliegende Spannung gemessen. Aus dem Verhältnis von der gemessenen Spannung zu dem eingeprägten Strom lässt sich ein Widerstandswert berechnen, der als Grundlage für die Ermittlung der Leitfähigkeit des in dem Messrohr strömenden Mediums dient, wobei die Leitfähigkeit des Mediums proportional zu dem Kehrwert des ermittelten Widerstandswertes ist.

Aus der DE 10 2014 007 426 A1 ist ein magnetisch-induktives Durchflussmessgerät bekannt, bei dem eine Durchflussmessung in einer Durchflussmesszeit durchgeführt wird, die kleiner ist als eine halbe Periodendauer der Magnetfelderzeugung. Die Leitfähigkeit wird dann während einer Leitfähigkeitsmesszeit bestimmt, die außerhalb der Durchflussmesszeit liegt.

Weitere magnetisch-induktive Durchflussmessgeräte, die eine Leitfähigkeitsmesseinrichtung aufweisen, sind beispielsweise aus den Druckschriften DE 102 43 748 A1, DE 10 2009 002 539 A1, EP0 336 615 A1 und EP 0 626 567 A1 bekannt.

Zudem ist es bekannt, die Leitfähigkeitsmessung in den Umschaltphasen des für die magnetisch-induktive Durchflussmessung erzeugten Magnetfeldes durchzuführen, um so die Zeit zu nutzen, die notwendig ist, bis sich das Magnetfeld ausreichend stabilisiert hat. Entsprechend wird während der Umschaltzeit des Magnetfeldes der für die Leitfähigkeitsmessung notwendige Strom zwischen den Elektroden in das Medium eingeprägt und die durch den Strom über das Medium an den Elektroden abfallende Spannung gemessen.

Bevor die eigentliche magnetisch-induktive Durchflussmessung gestartet wird, wird der eingeprägte Strom abgeschaltet. Obwohl die Leitfähigkeitsmessung abgeschlossen ist, verbleibt eine von der Leitfähigkeit des Mediums abhängige Restspannung zwischen den Elektroden. Diese Restspannung wird bei der Durchflussmessung mitgemessen und führt zu einem von der Leitfähigkeit des Mediums abhängigen Fehler, der sich durch einen Spannungsoffset bemerkbar und den mit der magnetisch-induktiven Durchflussmessung ermittelten Durchflusswert von der Leitfähigkeit des Mediums abhängig macht.

Entsprechend ist Aufgabe der vorliegenden Erfindung, ein magnetisch-induktives Durchflussmessgerät bereitzustellen, mit dem eine verbesserte Durchflussmessung durchgeführt werden kann. Zudem ist es Aufgabe der Erfindung, ein Verfahren zum Betreiben eines solchen magnetisch-induktiven Durchflussmessgerätes bereitzustellen.

Die Aufgabe ist bei dem erfindungsgemäßen magnetisch-induktiven Durchflussmessgerät dadurch gelöst, nämlich mit den Merkmalen des Kennzeichnungsteils des Patentanspruchs 1, dass die Leitfähigkeitsmesseinrichtung einen Messkreis aufweist, wobei die Elektroden Teil des Messkreises sind und wobei der Messkreis eine Spannungsquelle und eine Messeinheit aufweist. Im Betriebszustand der Leitfähigkeitsmesseinrichtung erzeugt die Spannungsquelle eine Messkreisspannung im Messkreis. Die Messeinheit misst die zwischen den Elektroden anliegende Ist-Elektrodenspannung. Des Weiteren weist die Leitfähigkeitsmesseinrichtung des erfindungsgemäßen magnetisch-induktiven Durchflussmessgerätes eine Regeleinheit und eine Auswerteeinheit auf. Im Betriebszustand der Leitfähigkeitsmesseinrichtung regelt die Regeleinheit die Ist-Elektrodenspannung auf einen vorgegebenen konstanten Sollwert. Die Auswerteeinheit ermittelt den zwischen den Elektroden fließenden Elektrodenstrom und berechnet mit dem Wert für den ermittelten Elektrodenstrom und der Ist-Elektrodenspannung den Leitfähigkeitswert des Mediums und/oder eine mit der Leitfähigkeit zusammenhängende Größe. Eine solche Größe kann beispielsweise der Widerstandswert des Mediums sein. Zur Erläuterung wird angemerkt, dass mit der gemessenen Ist-Elektrodenspannung und dem ermittelten Elektrodenstrom an sich zunächst der Leitwert bzw. der Widerstandswert des Mediums in der konkreten geometrischen Anordnung von Elektroden und Messrohr berechnet werden kann. Über einen Faktor lässt sich dann aber auf die Leitfähigkeit bzw. den elektrischen Widerstand des Mediums als Materialgröße schließen.

Anders als aus dem Stand der Technik bekannt, wird bei dem erfindungsgemäßen magnetisch-induktiven Durchflussmessgerät zur Bestimmung der Leitfähigkeit des Mediums nicht ein Strom zwischen den Elektroden eingeprägt und die resultierende Spannung gemessen, sondern eine konstante Elektrodenspannung zwischen den Elektroden erzeugt und der aus der konstanten Spannung resultierende Elektrodenstrom ermittelt. Aus den beiden Werten wird dann der Leitfähigkeitswert des leitfähigen Mediums bestimmt. Das magnetisch-induktive Durchflussmessgerät gemäß der Erfindung weist gegenüber dem Stand der Technik den Vorteil auf, dass die Elektrodenspannung, die bei der Leitfähigkeitsmessung des Mediums zwischen den Elektroden anliegt, im Wesentlichen konstant und damit nicht mehr abhängig bzw. bestimmt von der Leitfähigkeit des Mediums ist. Entsprechend ist auch die an den Elektroden verbleibende Restspannung nach Abschluss der Leitfähigkeitsmessung konstant, was zu einem konstanten, leitfähigkeitsunabhängigen Offset in der magnetisch-induktiven Durchflussmessung führt, der demzufolge viel einfacher berücksichtigt bzw. rechnerisch kompensiert werden kann.

Die von der Spannungsquelle im Messkreis erzeugte Spannung kann eine beliebige Form aufweisen. In einer besonders bevorzugten Ausgestaltung ist die Spannung jedoch eine Wechselspannung, vorzugsweise eine harmonische Wechselspannung. In einer bevorzugten Ausgestaltung werden bei der erzeugten Spannung zwei sinusförmige Spannungen überlagert. Besonders bevorzugt ist die Frequenz der zweiten sinusförmigen Spannung doppelt so hoch wie die Frequenz der ersten sinusförmigen Spannung.

Die Regeleinheit und die Auswerteeinheit sind bei einer ersten Ausgestaltung des magnetisch-induktiven Durchflussmessgerätes als separate Einheiten ausgebildet. In einer zweiten Ausgestaltung des erfindungsgemäßen magnetisch-induktiven Durchflussmessgerätes sind die Regeleinheit und die Auswerteeinheit jedoch als gemeinsame Einheit realisiert, insbesondere durch einen Mikrocontroller realisiert.

Erfindungsgemäß wird der zwischen den Elektroden durch das Medium und damit im Messkreis fließende Elektrodenstrom gemessen. In einer ersten Ausgestaltung weist der Messkreis der Leitfähigkeitsmesseinrichtung eine Strommesseinheit auf, die den Elektrodenstrom - und damit den Messkreisstrom - misst. Besonders bevorzugt übermittelt die Strommesseinheit den Wert für den gemessenen Elektrodenstrom an die Auswerteeinheit. In einer zweiten Ausgestaltung des erfindungsgemäßen magnetisch-induktiven Durchflussmessgerätes ermittelt die Auswerteeinheit die Spannungsdifferenz zwischen der erzeugten Messkreisspannung und der Ist-Elektrodenspannung und bestimmt den Elektrodenstrom aus der Spannungsdifferenz und einem Widerstandswert des Messkreises. Diese Ausgestaltung weist den Vorteil auf, dass keine zusätzliche Messeinheit, nämlich keine zusätzliche Strommesseinheit vorgesehen sein muss. Vielmehr kann der zwischen den Elektroden fließenden Elektrodenstrom mit Hilfe von bekannten Größen bestimmt werden.

Der Widerstandswert des Messkreises ist in einer besonders bevorzugten Ausgestaltung des erfindungsgemäßen magnetisch-induktiven Durchflussmessgerätes in der Auswerteeinheit abgelegt. Besonders bevorzugt ist ein elektrischer Widerstand in den Messkreis integriert, wobei der elektrische Widerstand einen bekannten Widerstandswert aufweist, der in der Auswerteeinheit abgelegt ist.

Eine besonders bevorzugte Ausgestaltung des magnetisch-induktiven Durchflussmessgerätes zeichnet sich dadurch aus, dass in der Regeleinheit der vorgegebene konstante Sollwert für die Elektrodenspannung abgelegt ist. Die Regeleinheit vergleicht die von der Messeinheit gemessene Ist-Elektrodenspannung mit dem abgelegten Sollwert und ermittelt so eine Regeldifferenz. Die Regeldifferenz ist also der Differenzwert zwischen dem Sollwert und der Ist-Elektrodenspannung. Unter Verwendung der Regeldifferenz stellt die Regeleinheit die Messkreisspannung nach. Die Regeleinheit ist in einer besonders bevorzugten Ausgestaltung als P-Regler, PI-Regler oder PID-Regler ausgebildet.

In einer besonders bevorzugten Ausgestaltung beträgt der Sollwert für die Elektrodenspannung 1mV, sodass die Ist-Elektrodenspannung auf 1mV geregelt wird. Ebenfalls denkbar sind jedoch auch kleinere oder größere Werte für den Sollwert.

Eine weitere Ausgestaltung des magnetisch-induktiven Durchflussmessgerätes ist dadurch gekennzeichnet, dass der Messkreis wenigstens zwei durch jeweils mindestens einen Schalter in den Messkreis integrierbare alternative Messpfade aufweist. Jeder der wenigstens zwei Messpfade weist einen Widerstand auf, wobei die wenigstens zwei Widerstände der wenigstens zwei Messpfade voneinander verschiedene Widerstandswerte aufweisen. In der Regeleinheit sind die Widerstandswerte der verschiedenen Widerstände abgelegt. Zudem ist die Regeleinheit derart ausgebildet, dass sie die Schalter schalten und damit die alternativen Messpfade alternativ wirksam in den Messkreis schalten kann. In einer bevorzugten Ausgestaltung weist der Messkreis drei durch jeweils mindestens einen Schalter in den Messkreis integrierbare Messpfade auf.

Besonders bevorzugt ist die Regeleinheit derart ausgebildet, dass sie die Entscheidung, welcher Messpfad wirksam in den Messkreis geschaltet werden soll, in Abhängigkeit von der Regeldifferenz, also der Differenz zwischen Sollwert und gemessener Ist-Elektrodenspannung, und dem Merkmal, dass die Spannungsquelle an der Grenze ihres Stellbereiches betrieben wird, trifft. Ein Umschalten von einem Messpfad zu einem anderen Messpfad wird bevorzugt also immer dann durchgeführt, wenn die Spannungsquelle an den Grenzen ihres Stellbereiches betrieben wird, die Regeldifferenz jedoch noch existent ist, bzw. einen tolerierbaren Wert überschreitet. Das magnetisch-induktive Durchflussmessgerät weist dadurch den großen Vorteil auf, dass ein sehr breiter Messbereich realisiert werden kann. Der Messbereich der Leitfähigkeitsmesseinrichtung kann entsprechend über das Zuschalten eines alternativen Messpfades eingestellt und variiert werden.

In einer weiteren Ausgestaltung des erfindungsgemäßen magnetisch-induktiven Durchflussmessgerätes ist in dem Messkreis ein Kondensator vorgesehen. In der Ausgestaltung, in der der Messkreis mehrere alternativ schaltbare Messpfade aufweist, ist in jedem Messpfad ein Kondensator vorgesehen. Der Kondensator dient zur Filterung - im Sinne von Unterdrückung - von Gleichstromanteilen in den Messkreis. Solche Gleichstromanteile würden sich ungünstig auf die Elektrodenspannung auswirken und daher auch die Durchflussmessung beeinflussen, was durch die Filterung mit dem Kondensator verhindert wird. Die Kapazität des Kondensators wird so groß gewählt, dass der Spannungsabfall am Kondensator praktisch vernachlässigt werden kann, beispielsweise im Vergleich zum Spannungsabfall über der Mediumstrecke (messbar an den Elektroden) und beispielsweise im Vergleich zum Spannungsabfall über dem zusätzlichen ohmschen Widerstand.

Neben dem magnetisch-induktiven Durchflussmessgerät betrifft die Erfindung ebenfalls ein Verfahren zum Betreiben eines erfindungsgemäßen magnetisch-induktiven Durchflussmessgerätes, nämlich ein Verfahren zum Betreiben eines magnetisch-induktiven Durchflussmessgerätes, das ein Messrohr zum Führen eines leitfähigen Mediums, eine Magnetfelderzeugungseinrichtung zur Erzeugung eines das Messrohr zumindest teilweise senkrecht zur Strömungsrichtung des Mediums durchsetzenden Magnetfeldes, Elektroden zum Abgreifen einer in dem Medium induzierten Messspannung und eine Leitfähigkeitsmesseinrichtung mit einem Messkreis aufweist, wobei die Elektroden Teil des Messkreises sind und wobei der Messkreis eine Spannungsquelle und eine Messeinheit aufweist, und wobei die Leitfähigkeitsmesseinrichtung eine Regeleinheit und eine Auswerteeinheit aufweist.

Bei dem erfindungsgemäßen Verfahren wird in einem Erzeugungsschritt von der Spannungsquelle eine Messkreisspannung in dem Messkreis erzeugt und in einem Messschritt von der Messeinheit die Ist-Elektrodenspannung zwischen den Elektroden gemessen. In einem Vergleichsschritt wird von der Regeleinheit die gemessene Ist-Elektrodenspannung mit einem vorgegebenen Sollwert verglichen und eine Regeldifferenz ermittelt.

Im Fall eines Überschreitens der Regeldifferenz über einen vorgegebenen Wert wird in einem Nachstellschritt von der Regeleinheit die Messkreisspannung nachgestellt, bis dass die Regeldifferenz unter dem vorgegebenen Wert liegt oder dem vorgegebenen Wert entspricht. Der vorgegebene Wert ist beispielsweise in der Regeleinheit abgelegt.

In einem Ermittlungsschritt wird von der Auswerteeinheit der zwischen den Elektroden fließende Elektrodenstrom ermittelt und in einem Berechnungsschritt von der Auswerteeinheit ein Wert für die Leitfähigkeit aus dem Elektrodenstrom und der Ist-Elektrodenspannung und/oder eine mit der Leitfähigkeit zusammenhängende Größe berechnet. Die mit der Leitfähigkeit zusammenhängende Größe kann beispielsweise der Widerstandswert des Mediums sein.

In einer ganz besonders bevorzugten Ausführungsform des erfindungsgemäßen Verfahrens wird in dem Ermittlungsschritt der Elektrodenstrom aus der Differenz der angelegten Messkreisspannung und der Ist-Elektrodenspannung und einem Widerstandswert des Messkreises bestimmt. Besonders bevorzugt ist der Widerstandswert des Messkreises in der Auswerteeinheit abgelegt.

Das erfindungsgemäße Verfahren kann in verschiedenen Ausführungsformen durchgeführt werden. In einer Ausführungsform werden der Ermittlungsschritt und der Berechnungsschritt dann durchgeführt, wenn die Regeldifferenz dem vorgegebenen Wert entspricht oder unter dem vorgegebenen Wert liegt. Der vorgegebene Wert entspricht hier einer tolerierbaren Abweichung der Ist-Elektrodenspannung von dem Sollwert und kann beispielsweise von einem Nutzer vorgegeben werden. Entspricht die Regeldifferenz dem vorgegebenen Wert oder ist sogar kleiner als der vorgegebene Wert, ist die Ist-Elektrodenspannung entsprechend eingeregelt.

In einer weiteren Ausführungsform werden der Ermittlungsschritt und der Berechnungsschritt unabhängig davon durchgeführt, welchen Wert die ermittelte Regeldifferenz aufweist, also unabhängig davon, ob die Ist-Elektrodenspannung bereits dem Sollwert entspricht. Gleichzeitig wird der Nachstellschritt durchgeführt, so lange, bis die Ist-Elektrodenspannung dem Sollwert entspricht. Bei dieser Ausführungsform werden die einzelnen Schritte mehrfach wiederholt, bevorzugt so lange, bis letztendlich die Regeldifferenz dem vorgegebenen Wert entspricht.

Weist der Messkreis des magnetisch-induktiven Durchflussmessgerätes wenigstens zwei durch jeweils einen Schalter in den Messkreis integrierbare alternative Messpfade auf und weist weiter jeder der wenigstens zwei Messpfade einen Widerstand auf, wobei die wenigstens zwei Widerstände der wenigstens zwei Messpfade einen voneinander verschiedenen Widerstandswert aufweisen und wobei die wenigstens zwei Widerstandswerte der Widerstände in der Regeleinheit abgelegt sind, ist eine Weiterbildung des erfindungsgemäßen Verfahrens dadurch gekennzeichnet, dass in einem Schaltschritt von der Regeleinheit einer der Schalter geschlossen wird, wodurch einer der Messpfade wirksam in den Messkreis geschaltet wird. Die Regeleinheit schaltet bevorzugt genau einen der Messpfade wirksam in den Messkreis. Durch diese Ausführungsform wird auf elegante Art und Weise der Messbereich der Leitfähigkeitsmesseinrichtung variiert.

Besonders bevorzugt wird in einem Kontrollschritt von der Regeleinheit überprüft, ob die Spannungsquelle an der Grenze ihres Stellbereiches betrieben wird. Zusätzlich wird in dem Kontrollschritt überprüft, ob die Regeldifferenz oberhalb des vorgegebenen Wertes liegt. In einem auf den Kontrollschritt folgenden Entscheidungsschritt wird von der Regeleinheit entschieden, ob ein anderer alternativer Messpfad wirksam in den Messkreis geschaltet wird. Die Entscheidung, einen anderen Messpfad in den Messkreis zu schalten, wird dann positiv entschieden, wenn die Spannungsquelle an der Grenze ihres Stellbereiches betrieben wird, wobei dies sowohl die Obergrenze als auch die Untergrenze sein kann, und wenn gleichzeitig die Regeldifferenz oberhalb des vorgegebenen Wertes liegt, wenn also die Ist-Elektrodenspannung noch nicht dem Sollwert entspricht. Bevorzugt wird von der Regeleinheit derjenige Messpfad ausgewählt, der den nächsthöheren oder nächstniedrigeren Widerstandswert aufweist, je nachdem, ob die Spannungsquelle an ihrer Obergrenze oder an ihrer Untergrenze betrieben wird.

Im Einzelnen gibt es nun eine Vielzahl von Möglichkeiten, das erfindungsgemäße magnetisch-induktive Durchflussmessgerät und das erfindungsgemäße Verfahren auszugestalten und weiterzubilden. Hierzu wird verwiesen auf die den unabhängigen Patentansprüchen nachgeordneten abhängigen Patentansprüche sowie auf die Beschreibung besonders bevorzugter Ausführungsbeispiele in Verbindung mit der Zeichnung. In der Zeichnung zeigen
- Fig. 1: eine erste Ausführungsform eines magnetisch-induktiven Durchflussmessgerätes mit Leitfähigkeitsmesseinrichtung,
- Fig. 2: eine zweite Ausgestaltung eines magnetisch-induktiven Durchflussmessgerätes mit einer Leitfähigkeitsmesseinrichtung,
- Fig. 3: ein Blockdiagramm einer ersten Ausführungsform des Verfahrens und
- Fig. 4: ein Blockdiagramm einer zweiten Ausführungsform des Verfahrens.

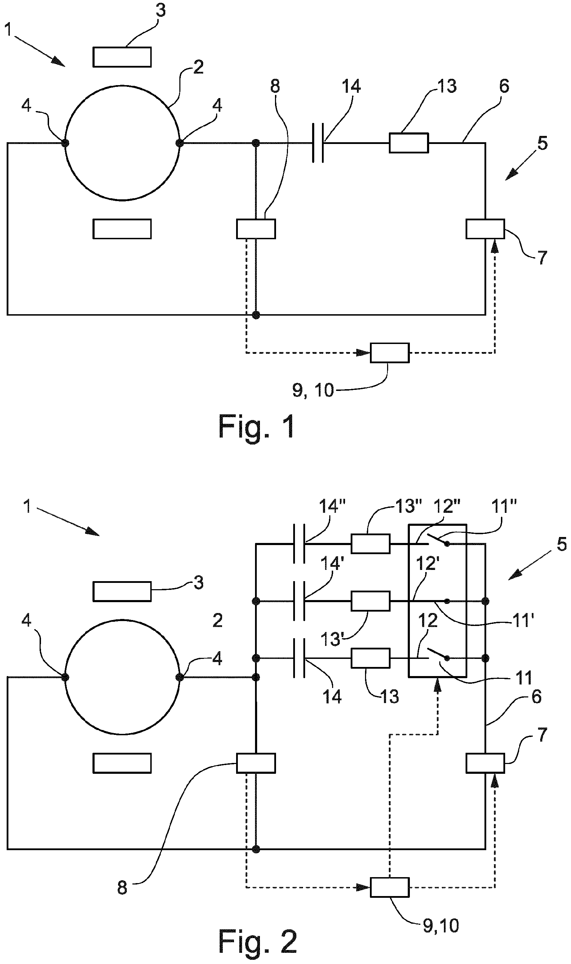

Fig. 1 zeigt ein magnetisch-induktives Durchflussmessgerät 1. Das magnetisch-induktive Durchflussmessgerät 1 weist ein Messrohr 2 zum Führen eines elektrisch leitfähigen Mediums und eine Magnetfelderzeugungseinrichtung 3 auf. Zwei Elektroden 4 dienen zum Abgreifen einer in dem Medium induzierten Messspannung. Um die Leitfähigkeit des leitfähigen Mediums ebenfalls bestimmen zu können, weist das magnetisch-induktive Durchflussmessgerät 1 eine Leitfähigkeitsmesseinrichtung 5 auf. Die Leitfähigkeitsmesseinrichtung 5 weist einen Messkreis 6 auf, wobei die beiden Elektroden 4 Teil des Messkreises 6 sind. Der Messkreis 6 weist zudem eine Spannungsquelle 7 und eine Messeinheit 8 auf. Die Spannungsquelle 7 erzeugt eine Messkreisspannung in dem Messkreis 6 und die Messeinheit 8 misst die zwischen den Elektroden 4 anliegende Ist-Elektrodenspannung. Des Weiteren weist die Leitfähigkeitsmesseinrichtung 5 eine Regeleinheit 9 und eine Auswerteeinheit 10 auf, die im vorliegenden dargestellten Ausführungsbeispiel als eine gemeinsame Einheit, nämlich als ein Mikrocontroller realisiert sind. Im Betriebszustand der Leitfähigkeitsmesseinrichtung 5 regelt die Regeleinheit 9 die Ist-Elektrodenspannung auf einen vorgegebenen konstanten Sollwert. Die Auswerteeinheit 10 ermittelt den zwischen den Elektroden 4 fließenden Elektrodenstrom und berechnet mit dem Wert für den ermittelten Elektrodenstrom und der Ist-Elektrodenspannung eine mit der Leitfähigkeit des Mediums zusammenhängende Größe, wie beispielsweise den Widerstandswert des Mediums, und/oder den Leitfähigkeitswert des Mediums.

Das dargestellte magnetisch-induktive Durchflussmessgerät 1 weist den Vorteil auf, dass die zwischen den Elektroden 4 anliegende Ist-Elektrodenspannung auf einen konstanten Wert geregelt ist. Da die Leitfähigkeitsmessung die magnetisch-induktive Durchflussmessung durch zwischen den Elektroden 4 verbleibende Restspannungen beeinflusst, kann mit dem dargestellten magnetisch-induktiven Durchflussmessgerät 1 erreicht werden, dass die verbleibenden Restspannungen konstant sind und nicht von der Leitfähigkeit des Mediums abhängen bzw. nicht von der Leitfähigkeit des Mediums bestimmt sind. Die verbleibenden Restspannungen führen zu einem Fehler in der Durchflussmessung, machen sich insbesondere durch einen Spannungsoffset in der gemessenen, durch das Magnetfeld in dem Medium induzierten Messspannung bemerkbar. Durch die konstante Ist-Elektrodenspannung zwischen den Elektroden 4 und damit durch die konstanten Restspannungen ergibt sich ein konstanter Offset-Wert, sodass die magnetisch-induktive Durchflussmessung nicht mehr abhängig von der Leitfähigkeit des Mediums ist.

Fig. 2 zeigt eine weitere Ausgestaltung eines magnetisch-induktiven Durchflussmessgerätes 1 mit einer Leitfähigkeitsmesseinrichtung 5. Im Unterschied zu der in Fig. 1 dargestellten Ausführungsform weist der Messkreis 6 drei durch jeweils einen Schalter 11, 11', 11" in den Messkreis 6 integrierbare alternative Messpfade 12, 12', 12" auf. Im dargestellten Ausführungsbeispiel ist der Schalter 11' geschlossen, wohingegen die beiden Schalter 11, 11" geöffnet sind, sodass der Messpfad 12' aktiv in dem Messkreis 6 integriert ist.

Jeder der Messpfade 12, 12', 12" weist einen ohmschen Widerstand 13, 13', 13" auf. Die Widerstände 13, 13', 13" weisen jeweils einen voneinander verschiedenen Widerstandswert auf. Zudem weist jeder Messpfad 12, 12', 12" einen Kondensator 14, 14', 14" auf. Die Kondensatoren 14, 14', 14" dienen zum Herausfiltern von Gleichspannungsanteilen in der Messkreisspannung.

Im Unterschied zu dem in Fig 1 dargestellten Ausführungsbeispiel ergibt sich bei dem in Fig. 2 dargestellten Ausführungsbeispiel der weitere Vorteil, dass der Messbereich der Leitfähigkeitsmesseinrichtung 5 durch entsprechendes Zuschalten eines der Messpfade 12, 12', 12" variiert und an das Medium angepasst werden kann. Die Regeleinheit 9 ist hierbei derart ausgestaltet, dass sie überprüft, ob die Spannungsquelle 7 an der Grenze ihres Stellbereiches betrieben wird und ob die von der Regeleinheit 9 ermittelte Regeldifferenz oberhalb eines vorgegebenen Wertes liegt. Wird die Spannungsquelle 7 an der Grenze ihres Stellbereiches betrieben und liegt zudem die Regeldifferenz oberhalb eines vorgegebenen Wertes, so schaltet die Regeleinheit 9 einen anderen Messpfad 12, 12', 12" in den Messkreis 6 ein. Die Spannungsquelle 7 ist hier durch einen digital/analog-Wandler realisiert. Entsprechend ist die Messeinheit 8 als analog/digital-Wandler realisisert.

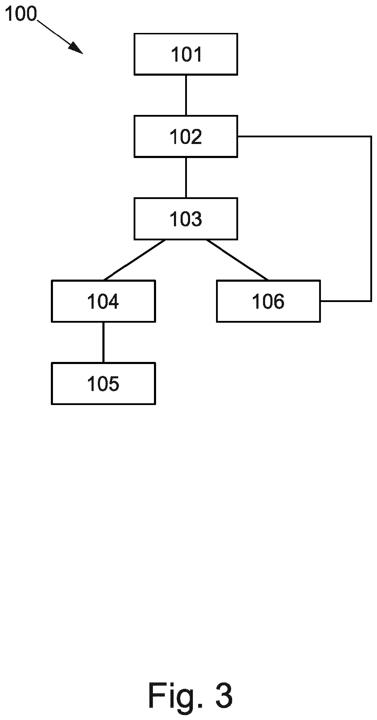

Fig. 3 zeigt ein Blockdiagramm einer Ausführungsform eines Verfahrens 100 zum Betreiben eines beschriebenen magnetisch-induktiven Durchflussmessgerätes 1. In einem Erzeugungsschritt 101 wird von der Spannungsquelle 7 eine Messkreisspannung in dem Messkreis 6 erzeugt. In einem Messschritt 102 wird von der Messeinheit 8 die Ist-Elektrodenspannung zwischen den Elektroden 4 gemessen. In einem Vergleichsschritt 103 wird von der Regeleinheit 9 die gemessene Ist-Elektrodenspannung mit einem vorgegebenen Sollwert verglichen und eine Regeldifferenz ermittelt. In einem Ermittlungsschritt 104 wird von der Auswerteeinheit 10 der zwischen den Elektroden 4 fließende Elektrodenstrom ermittelt und in einem Berechnungsschritt 105 wird von der Auswerteeinheit ein Wert für die Leitfähigkeit aus dem Elektrodenstrom und der Ist-Elektrodenspannung und/oder eine mit der Leitfähigkeit zusammenhängende Größe berechnet.

Überschreitet die Regeldifferenz einen vorgegebenen Wert, wird in einem Nachstellschritt 106 von der Regeleinheit 9 die Messkreisspannung nachgestellt, bis dass die Regeldifferenz unter dem vorgegebenen Wert liegt oder dem vorgegebenen Wert entspricht.

In dem dargestellten Verfahren wird in dem Ermittlungsschritt 104 der Elektrodenstrom aus der Differenz der angelegten Messkreisspannung und der Ist-Elektrodenspannung und einem Widerstandswert des Messkreises 6 bestimmt.

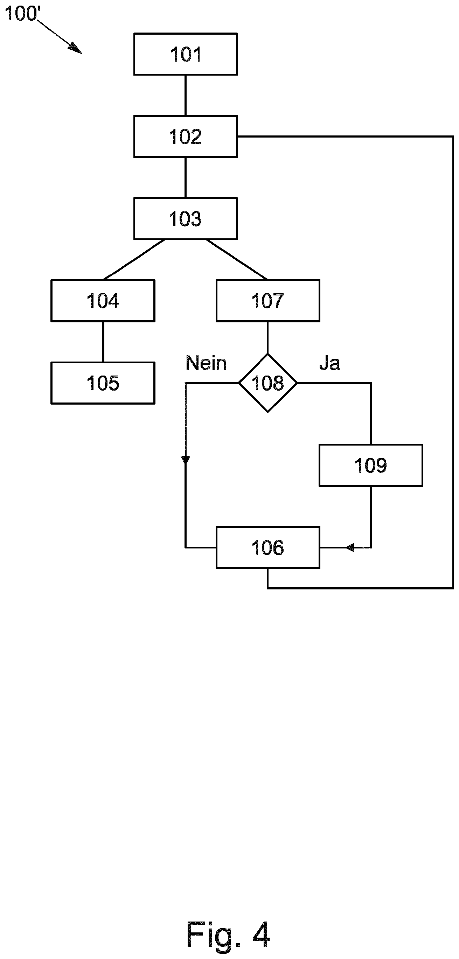

Fig. 4 zeigt ein Blockdiagramm eines zweiten Verfahrens 100' zum Betreiben eines magnetisch-induktiven Durchflussmessgerätes 1. Das Verfahren 100' wird bei einem magnetisch-induktiven Durchflussmessgerät 1 mit einer Leitfähigkeitsmesseinrichtung 5 durchgeführt, bei der der Messkreis 6 wenigstens zwei durch jeweils einen Schalter 11, 11', 11" in den Messkreis 6 integrierbare alternative Messpfade 12, 12', 12" aufweist, wobei jeder der wenigstens zwei Messpfade 12, 12', 12" einen Widerstand 13, 13', 13" aufweist. Die Widerstände 13, 13', 13" weisen einen voneinander verschiedenen Widerstandswert auf. Die entsprechenden Widerstandswerte sind in der Regeleinheit 9 abgelegt. Das in Fig. 4 dargestellte Verfahren 100' unterscheidet sich von dem in Fig. 3 dargestellten Verfahren 100 dadurch, dass weitere Verfahrensschritte durchgeführt werden. Nach dem Vergleichsschritt 103 wird von der Regeleinheit 9 ein Kontrollschritt 107 durchgeführt. In dem Kontrollschritt 107 wird von der Regeleinheit 9 überprüft, ob die Spannungsquelle 7 an der Grenze ihres Stellbereiches betrieben wird und ob die Regeldifferenz oberhalb eines vorgegebenen Wertes liegt, ob also die Ist-Elektrodenspannung um mehr als einen tolerierbaren Wert von dem Sollwert abweicht. In einem anschließenden Entscheidungsschritt 108 wird von der Regeleinheit 9 entschieden, ob ein anderer und welcher Messpfad 12, 12', 12" in den Messkreis 6 geschaltet werden soll. Wird die Spannungsquelle 7 an der Grenze ihres Stellbereiches betrieben und ist zudem die Regeldifferenz größer als der vorgegebene Wert, entscheidet die Regeleinheit 9, einen Schaltschritt 109 durchzuführen und einen anderen Messpfad 12, 12', 12" in den Messkreis 6 zu schalten. Anschließend erfolgt der Nachstellschritt 106. Entscheidet die Regeleinheit 9 in dem Entscheidungsschritt 108, dass nicht geschaltet werden soll, so erfolgt anschließend der Nachstellschritt 106, ohne dass ein anderer Messpfad 12, 12', 12" in den Messkreis 6 geschaltet wird.

### Bezugszeichen

- 1: magnetisch-induktives Durchflussmessgerät
- 2: Messrohr
- 3: Magnetfelderzeugungseinrichtung
- 4: Elektroden
- 5: Leitfähigkeitsmesseinrichtung
- 6: Messkreis
- 7: Spannungsquelle
- 8: Messeinheit
- 9: Regeleinheit
- 10: Auswerteeinheit
- 11: Schalter
- 12: Messpfad
- 13: Widerstand
- 14: Kondensator

- 100: Verfahren
- 100': Verfahren
- 101: Erzeugungsschritt
- 102: Messschritt
- 103: Vergleichsschritt
- 104: Ermittlungsschritt
- 105: Berechnungsschritt
- 106: Nachstellschritt
- 107: Kontrollschritt
- 108: Entscheidungsschritt
- 109: Schaltschritt

## Patentansprüche

1. Magnetisch-induktives Durchflussmessgerät (1), mit einem Messrohr (2) zum Führen eines leitfähigen Mediums, mit einer Magnetfelderzeugungseinrichtung (3) zur Erzeugung eines das Messrohr (2) zumindest teilweise senkrecht zur Strömungsrichtung des Mediums durchsetzenden Magnetfeldes, mit Elektroden (4) zum Abgreifen einer in dem Medium induzierten Messspannung und mit einer Leitfähigkeitsmesseinrichtung (5) zur Bestimmung der Leitfähigkeit des leitfähigen Mediums,
wobei die Leitfähigkeitsmesseinrichtung (5) einen Messkreis (6) aufweist, wobei die Elektroden (4) Teil des Messkreises (6) sind und wobei der Messkreis (6) eine Spannungsquelle (7) und eine Messeinheit (8) aufweist, wobei im Betriebszustand der Leitfähigkeitsmesseinrichtung (5) die Spannungsquelle (7) eine Messkreisspannung im Messkreis (6) erzeugt und die Messeinheit (8) die zwischen den Elektroden (4) anliegende Ist-Elektrodenspannung misst,
und wobei die Leitfähigkeitsmesseinrichtung (5) eine Regeleinheit (9) und eine Auswerteeinheit (10) aufweist, wobei im Betriebszustand der Leitfähigkeitsmesseinrichtung (5) die Regeleinheit (9) die Ist-Elektrodenspannung auf einen vorgegebenen konstanten Sollwert regelt und die Auswerteeinheit (10) den zwischen den Elektroden (4) fließenden Elektrodenstrom ermittelt und mit dem Wert für den ermittelten Elektrodenstrom und der Ist-Elektrodenspannung den Leitfähigkeitswert des Mediums oder eine mit der Leitfähigkeit zusammenhängende Größe berechnet.

2. Magnetisch-induktives Durchflussmessgerät (1) nach Anspruch 1, **dadurch gekennzeichnet, dass** der Messkreis (6) eine Strommesseinheit aufweist, die den Elektrodenstrom misst, insbesondere wobei die Strommesseinheit den Wert für den Elektrodenstrom an die Auswerteeinheit (10) übermittelt.

3. Magnetisch-induktives Durchflussmessgerät (1) nach Anspruch 1, **dadurch gekennzeichnet, dass** die Auswerteeinheit (10) die Spannungsdifferenz zwischen der erzeugten Messkreisspannung und der Ist-Elektrodenspannung bestimmt und den Elektrodenstrom aus der Spannungsdifferenz und einem Widerstandswert des Messkreises (6) berechnet.

4. Magnetisch-induktives Durchflussmessgerät (1) nach einem der Ansprüche 1 bis 3, **dadurch gekennzeichnet, dass** in der Regeleinheit (9) der vorgegebene konstante Sollwert abgelegt ist und die Regeleinheit (9) die von der Messeinheit (8) gemessene Ist-Elektrodenspannung mit dem Sollwert vergleicht und so eine Regeldifferenz ermittelt und unter Verwendung der Regeldifferenz die Messkreisspannung nachstellt, insbesondere wobei die Regeleinheit (9) als P-Regler, PI-Regler oder PID-Regler ausgebildet ist.

5. Magnetisch-induktives Durchflussmessgerät (1) nach einem der Ansprüche 1 bis 4, **dadurch gekennzeichnet, dass** der Messkreis (6) wenigstens zwei durch jeweils einen Schalter (11, 11', 11") in den Messkreis integrierbare alternative Messpfade (12, 12', 12") aufweist, wobei jeder der wenigstens zwei Messpfade (12, 12', 12") einen Widerstand (13, 13', 13") aufweist und wobei die wenigstens zwei Widerstände (13, 13', 13") der wenigstens zwei Messpfade (12, 12', 12") einen voneinander verschiedenen Widerstandswert aufweisen und dass in der Regeleinheit (9) die Widerstandswerte der Widerstände (13, 13', 13") abgelegt sind und dass die Regeleinheit (9) derart ausgebildet ist, dass sie die Schalter (11, 11', 11") schalten und damit die alternativen Messpfade (12, 12', 12") alternativ wirksam in den Messkreis (6) schalten kann.

6. Magnetisch-induktives Durchflussmessgerät (1) nach Anspruch 5, **dadurch gekennzeichnet, dass** die Regeleinheit (9) die Entscheidung, welcher Messpfad (12, 12', 12") wirksam in den Messkreis (6) geschaltet wird, abhängig davon trifft, ob die Regeldifferenz oberhalb eines vorgegebenen Wertes liegt und ob die Spannungsquelle (7) an der Grenze ihres Stellbereiches betrieben wird.

7. Magnetisch-induktives Durchflussmessgerät (1) nach Anspruch 5 oder 6, **dadurch gekennzeichnet, dass** jeder Messpfad (12, 12', 12") einen mit dem Widerstand (13, 13,', 13") in Reihe geschalteten Kondensator (14, 14', 14") zur Filterung von Gleichspannungsanteilen in der Messkreisspannung aufweist.

8. Verfahren (100, 100') zum Betreiben eines magnetisch-induktiven Durchflussmessgerätes (1), wobei das magnetisch-induktive Durchflussmessgerät (1) ein Messrohr (2) zum Führen eines leitfähigen Mediums, eine Magnetfelderzeugungseinrichtung (3) zur Erzeugung eines das Messrohr (2) zumindest teilweise senkrecht zur Strömungsrichtung des Mediums durchsetzenden Magnetfeldes, Elektroden (4) zum Abgreifen einer in dem Medium induzierten Messspannung und eine Leitfähigkeitsmesseinrichtung (5) mit einem Messkreis (6) aufweist, wobei die Elektroden (4) Teil des Messkreises (6) sind und wobei der Messkreis (6) eine Spannungsquelle (7) und eine Messeinheit (8) aufweist, und wobei die Leitfähigkeitsmesseinrichtung (5) eine Regeleinheit (9) und eine Auswerteeinheit (19) aufweist,
wobei in einem Erzeugungsschritt (101) von der Spannungsquelle (7) eine Messkreisspannung in dem Messkreis (6) erzeugt wird,
wobei in einem Messschritt (102) von der Messeinheit (8) die Ist-Elektrodenspannung zwischen den Elektroden (4) gemessen wird,
wobei in einem Vergleichsschritt (103) von der Regeleinheit (9) die gemessene Ist-Elektrodenspannung mit einem vorgegebenen Sollwert verglichen und eine Regeldifferenz ermittelt wird,
wobei im Fall eines Überschreitens der Regeldifferenz über einen vorgegebenen Wert in einem Nachstellschritt (106) von der Regeleinheit (9) die Messkreisspannung nachgestellt wird, bis dass die Regeldifferenz unter dem vorgegebenen Wert liegt oder dem vorgegebenen Wert entspricht,
wobei in einem Ermittlungsschritt (104) von der Auswerteeinheit (10) der zwischen den Elektroden (4) fließende Elektrodenstrom ermittelt wird
und wobei in einem Berechnungsschritt (105) von der Auswerteeinheit (10) ein Wert für die Leitfähigkeit aus der Ist-Elektrodenspannung und dem Elektrodenstrom und/oder eine mit der Leitfähigkeit zusammenhängende Größe berechnet wird.

9. Verfahren (100, 100') nach Anspruch 8, **dadurch gekennzeichnet, dass** in dem Ermittlungsschritt (104) der Elektrodenstrom aus der Differenz der angelegten Messkreisspannung und der Ist-Elektrodenspannung und einem Widerstandswert des Messkreises (6) bestimmt wird.

10. Verfahren (100, 100') nach Anspruch 8 oder 9, **dadurch gekennzeichnet, dass** der Ermittlungsschritt (104) und der Berechnungsschritt (105) durchgeführt werden, wenn die Regeldifferenz dem vorgegebenen Wert entspricht oder unter dem vorgegebenen Wert liegt, oder dass der Ermittlungsschritt (104) und der Berechnungsschritt (105) durchgeführt werden, unabhängig davon, welchen Wert die ermittelte Regeldifferenz aufweist.

11. Verfahren (100, 100') nach einem der Ansprüche 8 bis 10, wobei der Messkreis (6) wenigstens zwei durch jeweils einen Schalter (11, 11', 11") in den Messkreis (6) integrierbare alternative Messpfade (12, 12', 12") aufweist, wobei jeder der wenigstens zwei Messpfade (12, 12', 12") einen Widerstand (13, 13', 13") aufweist und wobei die wenigstens zwei Widerstände (13, 13', 13") der wenigstens zwei Messpfade (12, 12', 12") einen voneinander verschiedenen Widerstandswert aufweisen und wobei die wenigstens zwei Widerstandswerte der Widerstände (13, 13', 13") in der Regeleinheit (9) abgelegt sind, **dadurch gekennzeichnet, dass** in einem Schaltschritt (109) von der Regeleinheit (9) einer der Schalter (11, 11', 11") geschlossen wird, wodurch einer der Messpfade (12, 12', 12") wirksam in den Messkreis (6) geschaltet wird.

12. Verfahren (100, 100') nach Anspruch 11, **dadurch gekennzeichnet, dass** in einem Kontrollschritt (107) von der Regeleinheit (9) überprüft wird, ob die Spannungsquelle (7) an der Grenze ihres Stellbereiches betrieben wird und ob die Regeldifferenz oberhalb des vorgegebenen Wertes liegt und dass in einem Entscheidungsschritt (108) von der Regeleinheit (9) entschieden wird, ob ein anderer Messpfad (12, 12', 12") wirksam in den Messkreis (6) geschaltet wird und welcher Messpfad (12, 12', 12") wirksam in den Messkreis (6) geschaltet wird.

## Claims

1. Magnetic-inductive flowmeter (1) having a measuring tube (2) for guiding a conductive medium, having a magnetic field generator (3) for generating a magnetic field permeating the measuring tube (2) at least partially perpendicular to the flow direction of the medium, having electrodes (4) for tapping a measuring voltage induced in the medium and having a conductivity measuring device (5) for determining the conductivity of the conductive medium,
wherein the conductivity measuring device (5) has a measuring circuit (6), wherein the electrodes (4) are a part of the measuring circuit (6) and wherein in the measuring circuit (6) has a voltage source (7) and a measuring unit (8), wherein the voltage source (7) generates a measuring circuit voltage in the measuring circuit (6) in the operating state of the conductivity measuring device (5) and the measuring unit (8) measures the actual electrode voltage present between the electrodes (4),
and wherein the conductivity measuring device (5) has a control unit (9) and an evaluation unit (10), wherein, in the operating state of the conductivity measuring device (5), the control unit (9) sets the actual electrode voltage to a predetermined, constant setpoint value and the evaluation unit (10) determines the electrode current flowing between the electrodes (4) and calculates the conductivity value of the medium or a variable associated with the conductivity using the value for the determined electrode current and the actual electrode voltage.

2. Magnetic-inductive flowmeter (1) according to claim 1, **characterized in that** the measuring circuit (6) has a current measuring unit that measures the electrode current, in particular wherein the current measuring unit transmits the value for the electrode current to the evaluation unit (10).

3. Magnetic-inductive flowmeter (1) according to claim 1, **characterized in that** the evaluation unit (10) determines the voltage difference between the generated measuring circuit voltage and the actual electrode voltage and calculates the electrode current using the voltage difference and a resistance value of the measuring circuit (6).

4. Magnetic-inductive flowmeter (1) according to any one of claims 1 to 3, **characterized in that** the predetermined constant setpoint value is stored in the control unit (9) and the control unit (9) compares the actual electrode voltage measured by the measuring unit (8) to the setpoint value and thus adjusts the measuring circuit voltage using the control difference, in particular wherein the control unit (9) is designed as P-controller, PI-controller or PID-controller.

5. Magnetic-inductive flowmeter (1) according to any one of claims 1 to 4, **characterized in that** the measuring circuit (6) has at least two alternative measuring paths (12, 12', 12") that can each be integrated in the measuring circuit through a switch (11, 11', 11"), wherein each of the at least two measuring paths (12, 12', 12") has a resistor (13, 13', 13") and wherein the at least two resistors (13, 13', 13") of the at least two measuring paths (12, 12', 12") have a resistance value differing from one another and that the resistance values of the resistors (13, 13', 13") are stored in the control unit (9) and that the control unit (9) is designed in such a manner that it switches the switch (11, 11', 11") and thereby the alternative measuring paths (12, 12', 12") can alternatively be effectively connected in the measuring circuit (6).

6. Magnetic-inductive flowmeter (1) according to claim 5, **characterized in that** the control unit (9) makes a decision which measuring path (12, 12', 12") is effectively connected in the measuring circuit (6) depending on whether the control difference is above a predetermined value and whether the voltage source (7) is being operated at the limit of its controlling range.

7. Magnetic-inductive flowmeter (1) according to claim 5 or 6, **characterized in that** each measuring path (12, 12', 12") has a capacitor (14, 14', 14") connected in series with the resistor (13, 13', 13") for filtering of direct voltage portions in the measuring circuit voltage.

8. Method (100, 100') for operating a magnetic-inductive flowmeter (1), wherein the magnetic-inductive flowmeter has a measuring tube (2) for guiding a conductive medium, a magnetic field generator (3) for generating a magnetic field permeating the measuring tube (2) at least partially perpendicular to the flow direction of the medium, electrodes (4) for tapping a measuring voltage induced in the medium and a conductivity measuring device (5) with a measuring circuit (6), wherein the electrodes (4) are a part of the measuring circuit (6) and wherein the measuring circuit (6) has a voltage source (7) and a measuring unit (8), and wherein the conductivity measuring device (5) has a control unit (9) and an evaluation unit (10),
wherein a measuring circuit voltage in the measuring circuit (6) is generated by the voltage source (7) in a generating step (101),
wherein the actual electrode voltage between the electrodes (4) is measuring by the measuring unit (8) in a measuring step (102),
wherein the measuring actual electrode voltage is compared to a predetermined setpoint value and a control difference is determined by the control unit (9) in a comparing step (103),
wherein, in the case the control difference exceeds a predetermined value, the measuring circuit voltage is adjusted until the control difference lies below the predetermined value or corresponds to the predetermined value by the control unit (9) in an adjusting step (106),
wherein the electrode current flowing between the electrodes (4) is determined by the evaluation unit (10) in a determining step (104),
and wherein a value of the conductivity and/or a variable associated with the conductivity is calculated from the actual electrode voltage and the electrode current by the evaluation unit (10) in a calculating step (105).

9. Method (100, 100') according to claim 8, **characterized in that** the electrode current is determined from the difference of the applied measuring circuit voltage and the actual measuring circuit voltage and a resistance value of the measuring circuit (6) in the determining step (104).

10. Method (100, 100') according to claim 8 or 9, **characterized in that** the determining step (104) and the calculating step (105) are carried out when the control difference corresponds to the predetermined value or lies below the predetermined value, or that the determining step (104) and the calculating step (105) are carried out in dependence on which value the determined control difference has.

11. Method (100, 100') according to any one of claims 8 to 10, wherein the measuring circuit (6) has at least two alternative measuring paths (12, 12', 12") that can each be integrated in the measuring circuit (6) through a switch (11, 11', 11"), wherein each of the at least two measuring paths (12, 12', 12") has a resistor (13, 13', 13") and wherein the at least two resistors (13, 13', 13") of the at least two measuring paths (12, 12', 12") have a resistance value differing from one another and wherein the at least two resistance values of the resistors (13, 13', 13") are stored in the control unit (9) **characterized in that** one of the switches (11, 11', 11") is closed by the control unit (9) in a connecting step (109), whereby one of the measuring paths (12, 12', 12") is effectively connected in the measuring circuit.

12. Method (100, 100') according to claim 11, **characterized in that**, in a control step (107), the control unit (9) checks whether the voltage source (7) is being operated at the limit of its controlling range and whether the control difference is above the predetermined value and that, in a deciding step (108), the control unit (9) decides whether another measuring path (12, 12', 12") is effectively connected in the measuring circuit (6) and which measuring path (12, 12', 12") is effectively connected in the measuring circuit (6).

## Revendications

1. Débitmètre électromagnétique (1), comprenant un tube de mesure (2) servant à guider un fluide conducteur, un dispositif de génération de champ magnétique (3) servant à générer un champ magnétique traversant le tube de mesure (2) au moins partiellement de manière perpendiculaire à la direction d'écoulement du fluide, des électrodes (4) servant à prélever une tension de mesure induite dans le fluide, et un dispositif de mesure de conductivité (5) servant à déterminer la conductivité du fluide conducteur,
le dispositif de mesure de conductivité (5) présentant un circuit de mesure (6), les électrodes (4) faisant partie du circuit de mesure (6), et le circuit de mesure (6) présentant une source de tension (7) et une unité de mesure (8), dans lequel, en état de fonctionnement du dispositif de mesure de conductivité (5), la source de tension (7) génère une tension de circuit de mesure dans le circuit de mesure (6), et l'unité de mesure (8) mesure la tension d'électrode réelle appliquée entre les électrodes (4),
et le dispositif de mesure de conductivité (5) présentant une unité de régulation (9) et une unité d'évaluation (10), dans lequel, en état de fonctionnement du dispositif de mesure de conductivité (5), l'unité de régulation (9) régule la tension d'électrode réelle à une valeur théorique constante prédéfinie, et l'unité d'évaluation (10) établit le courant d'électrode circulant entre les électrodes (4) et calcule à l'aide de la valeur pour le courant d'électrode établi et de la tension d'électrode réelle la valeur de conductivité du fluide ou une grandeur liée à la conductivité.

2. Débitmètre électromagnétique (1) selon la revendication 1, **caractérisé en ce que** le circuit de mesure (6) présente une unité de mesure de courant qui mesure le courant d'électrode, en particulier dans lequel l'unité de mesure de courant transmet la valeur pour le courant d'électrode à l'unité d'évaluation (10) .

3. Débitmètre électromagnétique (1) selon la revendication 1, **caractérisé en ce que** l'unité d'évaluation (10) détermine la différence de tension entre la tension de circuit de mesure générée et la tension d'électrode réelle et calcule le courant d'électrode sur la base de la différence de tension et d'une valeur de résistance du circuit de mesure (6).

4. Débitmètre électromagnétique (1) selon l'une quelconque des revendications 1 à 3, **caractérisé en ce que** la valeur théorique constante prédéfinie est stockée dans l'unité de régulation (9), et l'unité de régulation (9) compare la tension d'électrode réelle mesurée par l'unité de mesure (8) avec la valeur théorique et établit ainsi une différence de régulation, et réajuste la tension de circuit de mesure en utilisant la différence de régulation, l'unité de régulation (9) étant réalisée en particulier sous la forme d'un régulateur P, d'un régulateur PI ou d'un régulateur PID.

5. Débitmètre électromagnétique (1) selon l'une quelconque des revendications 1 à 4, **caractérisé en ce que** le circuit de mesure (6) présente au moins deux voies de mesure (12, 12', 12") alternatives pouvant être intégrées dans le circuit de mesure par respectivement un commutateur (11, 11', 11"), chacune des au moins deux voies de mesure (12, 12', 12") présentant une résistance (13, 13', 13"), et les au moins deux résistances (13, 13', 13") des au moins deux voies de mesure (12, 12', 12") présentant des valeurs de résistance différentes les unes des autres, et **en ce que** les valeurs de résistance des résistances (13, 13', 13") sont stockées dans l'unité de régulation (9), et **en ce que** l'unité de régulation (9) est réalisée de telle sorte qu'elle peut mettre en circuit les commutateurs (11, 11', 11") et peut donc activer alternativement les voies de mesure (12, 12', 12") alternatives dans le circuit de mesure (6).

6. Débitmètre électromagnétique (1) selon la revendication 5, **caractérisé en ce que** l'unité de régulation (9) prend la décision concernant la voie de mesure (12, 12', 12") qui sera activée dans le circuit de mesure (6) en fonction du fait si la différence de régulation est supérieure à une valeur prédéfinie et si la source de tension (7) fonctionne à la limite de sa plage de réglage.

7. Débitmètre électromagnétique (1) selon la revendication 5 ou 6, **caractérisé en ce que** chaque voie de mesure (12, 12', 12") présente un condensateur (14, 14', 14") connecté en série avec la résistance (13, 13,', 13") pour filtrer des composantes de tension continue dans la tension de circuit de mesure.

8. Procédé (100, 100') permettant de faire fonctionner un débitmètre électromagnétique (1), le débitmètre électromagnétique (1) présentant un tube de mesure (2) servant à guider un fluide conducteur, un dispositif de génération de champ magnétique (3) servant à générer un champ magnétique traversant le tube de mesure (2) au moins partiellement de manière perpendiculaire à la direction d'écoulement du fluide, des électrodes (4) servant à prélever une tension de mesure induite dans le fluide, et un dispositif de mesure de conductivité (5) doté d'un circuit de mesure (6), les électrodes (4) faisant partie du circuit de mesure (6) et le circuit de mesure (6) présentant une source de tension (7) et une unité de mesure (8), et le dispositif de mesure de conductivité (5) présentant une unité de régulation (9) et une unité d'évaluation (19),
dans lequel, dans une étape de génération (101), la source de tension (7) génère une tension de circuit de mesure dans le circuit de mesure (6),
dans lequel, dans une étape de mesure (102), l'unité de mesure (8) mesure la tension d'électrode réelle entre les électrodes (4),
dans lequel, dans une étape de comparaison (103), l'unité de régulation (9) compare la tension d'électrode réelle mesurée avec une valeur théorique prédéfinie et établit une différence de régulation,
dans lequel, en cas de dépassement de la différence de régulation au-delà d'une valeur prédéfinie, dans une étape de réajustage (106), l'unité de régulation (9) réajuste la tension de circuit de mesure jusqu'à ce que la différence de régulation soit supérieure à la valeur prédéfinie ou corresponde à la valeur prédéfinie,
dans lequel, dans une étape d'établissement (104), l'unité d'évaluation (10) établit le courant d'électrode circulant entre les électrodes (4), et
dans lequel, dans une étape de calcul (105), l'unité d'évaluation (10) calcule une valeur pour la conductivité sur la base de la tension d'électrode réelle et du courant d'électrode et/ou calcule une grandeur liée à la conductivité.

9. Procédé (100, 100') selon la revendication 8, **caractérisé en ce qu'**à l'étape d'établissement (104), le courant d'électrode est déterminé à partir de la différence entre la tension de circuit de mesure appliquée et la tension d'électrode réelle et d'une valeur de résistance du circuit de mesure (6).

10. Procédé (100, 100') selon la revendication 8 ou 9, **caractérisé en ce que** l'étape d'établissement (104) et l'étape de calcul (105) sont effectuées lorsque la différence de régulation correspond à la valeur prédéfinie ou est inférieure à la valeur prédéfinie, ou **en ce que** l'étape d'établissement (104) et l'étape de calcul (105) sont effectuées indépendamment de la valeur que présente la différence de régulation établie.

11. Procédé (100, 100') selon l'une quelconque des revendications 8 à 10, dans lequel le circuit de mesure (6) présente au moins deux voies de mesure (12, 12', 12") alternatives pouvant être intégrées dans le circuit de mesure (6) par respectivement un commutateur (11, 11', 11"), chacune des au moins deux voies de mesure (12, 12', 12") présentant une résistance (13, 13', 13"), et les au moins deux résistances (13, 13', 13") des au moins deux voies de mesure (12, 12', 12") présentant des valeurs de résistance différentes les unes aux autres, et les au moins deux valeurs de résistance des résistances (13, 13', 13") étant stockées dans l'unité de régulation (9),
**caractérisé en ce que** dans une étape de commutation (109), l'unité de régulation (9) ferme l'un des commutateurs (11, 11', 11") de manière à activer l'une des voies de mesure (12, 12', 12") dans le circuit de mesure (6).

12. Procédé (100, 100') selon la revendication 11, **caractérisé en ce que** dans une étape de contrôle (107), l'unité de régulation (9) vérifie si la source de tension (7) fonctionne à la limite de sa plage de réglage et si la différence de régulation est supérieure à la valeur prédéfinie, et **en ce que** dans une étape de décision (108), l'unité de régulation (9) décide si une autre voie de mesure (12, 12', 12") sera activée dans le circuit de mesure (6) et quelle voie de mesure (12, 12', 12") sera activée dans le circuit de mesure (6).
